# EUROPEAN PATENT SPECIFICATION

(11) **EP 4 003 047 B1**
(45) Date of publication and mention of the grant of the patent: **11.10.2023**
(21) Application number: 20743653.6
(22) Date of filing: 17.07.2020
(51) Int. Cl.: A23J 3/14, A23J 3/16, A23J 3/18, A23J 3/22, A23J 3/26

(54) **FORMED MEAT ANALOGUE PRODUCT**
GEFORMTES FLEISCHANALOGES PRODUKT
PRODUIT ANALOGUE DE VIANDE FORMÉ

(30) Priority: 31.07.2019 US 201962880881 P
(43) Date of publication of application: 01.06.2022
(73) Proprietor: Société des Produits Nestlé S.A., 1800 Vevey (CH)
(72) Inventor: GADDIPATI, Sanyasi, BEACHWOOD, Ohio 44122 (US); SHAMAILA, Mawele, 78224 SINGEN (DE)
(74) Representative: Györffy, Béla
(86) International application number: PCT/EP2020/070286
(87) International publication number: WO 2021/018632

(56) References cited:
- EP-A1- 1 759 593
- EP-A1- 3 508 067
- EP-A2- 1 493 337
- WO-A1-2012/075088
- WO-A1-2019/120960
- US-A1- 2009 208 612
- US-A1- 2009 291 188

## Description

The present invention relates to a formed meat analogue product, which comprises two intermixed parts in such a way as to provide a visual aspect of a marbled meat analogue product. Today's consumer demand more and more meat analogue products as substitutes for real meat based products in their diets. Reasons for this trend are varying from ecological, to economical, ethical and more health conscious considerations. Typically, such meat analogue products are plant protein extrudates, which are mixed with binders, oil and fat and various colorings and flavorings. However, there are still many limitations as to product quality such in taste, texture and overall visual appearance. Today the trend is towards meat replacement products, which mimic raw meat, meaning that the consumer buys these products 'raw' and processes/cooks them in the kitchen in the same way as he would with a corresponding raw meat product. Hence, the consumer expects those meat analogue products also to behave in the same way as raw meat when it comes to the taste, texture, and appearance of those products during the preparation and transformation during a cooking process.

Several solutions exist today and are for example described in WO2015/153666(A1) and WO2017/070303 (A1). EP 3 508 067 A1 discloses a method for producing a vegetable meat substitute. EP 1 759 593 A1 discloses a minced meat analogue that is composed of composite strands that contain a plurality of proteinaceous fibres and an interstitial material. With today's available meat alternative products, however, many limitations still exist and there is still a clear and persisting need in the art to improve the quality of such meat analogue products, as to taste, texture and particularly also to the visual aspects of such products, as to before, during and after the cooking process.

The object of the present invention is to improve the state of the art and to provide an improved solution as to meat analogue products and their process of manufacture. In particular, the object of the present invention is to provide a formed, raw meat analogue product, where the product requires to be cooked like a real raw meat product before consumption.

The object of the present invention is to provide a formed meat analogue product, which has an improved quality, when compared to corresponding real meat products, particularly in respect to the visual aspect related to the product before, during and after the cooking process.

The object of the present invention is achieved by the subject matter of the independent claims. The dependent claims further develop the idea of the present invention.

Accordingly, the present invention provides a formed meat analogue product comprising two intermixed parts having each a color, wherein
- a first part comprises a textured plant protein, a binder, and optionally a colorant;
- a second part comprises a vegetable fat and at least 10% physically processed starch;

wherein the color of the second part is different from the color of the first part; and
wherein the second part is intermixed with the first part in such a way as to provide a visual aspect of the meat analogue product as a marbled meat analogue product.

The inventors surprisingly found that when the process of manufacturing a formed meat analogue product is made in at least two steps, where the making of the plant protein part is separate from the making of the fat part, and where the fat part is first frozen and then comminuted into small pieces before mixing the two parts together for forming the meat analogue product, such analogue plant based products can be obtained, that very much visually resemble real meat products, in that they have a very similar marbled aspect of the fat part within the structured protein part. Upon cooking, the fat part melts in a similar way as in real meat products and thereby mimics the cooking experience for the consumer when replacing a formed real meat product with a formed meat analogue product of the present invention. Furthermore, as the fat composition of the present invention is not just fat but also contains significant amounts of starch and water, the overall content of fat and saturated fatty acids in a formed product can be reduced in comparison to real meat products, and this without compromising the visual appearance of a well marbled product. This constitutes a further important benefit of the present invention.

### Brief Description of the Figures

Figure 1: Raw sausages cut in half. A: Raw meat sausage as reference. Meat analogue sausage with fat composition from Example 2 are B: with Sample 1, and C: with Sample 2.
Figure 2: Same sausages as in Figure 1 A: and B: after being cooked at 100°C for 12 minutes.

### Detailed Description of the invention

The present invention pertains to a formed meat analogue product comprising two intermixed parts having each a color, wherein
- a first part comprises a textured plant protein, a binder, and optionally a colorant;
- a second part comprises a vegetable fat and at least 10% physically processed starch;

wherein the color of the second part is different from the color of the first part; and
wherein the second part is intermixed with the first part in such a way as to provide a visual aspect of the meat analogue product as a marbled meat analogue product.

Preferably, the formed meat analogue product of the present invention is raw, meaning that the product was not cooked during its process of manufacture.

"Meat analogue product", sometimes also called meat alternative, meat substitute, mock meat, faux meat, imitation meat or vegetarian meat, refers herein to a food product, exclusively made from vegetarian ingredients, and which has qualities as to appearance, taste, flavor, and texture as the corresponding real meat product.

"Formed" means that the meat analogue product has been formed, e.g. via molding, pressing or casting. The form may be a sausage or sausage type, a burger patty type, a ball like a meat ball.

"Textured plant protein" is referred in the literature also as 'texturized plant' or 'texturized vegetable protein' (TVP). It typically refers to a defatted plant protein flour, such as for example defatted soy flour, which is processed e.g. by extrusion into chunks or flakes.

The term "raw" for the present invention means 'un-cooked'. The term "marbled" means that the product has markings and colorings suggestive of marble, and which are marked herein by the intermixture of textured plant protein/binder composition, and a vegetable fat/starch composition. This visual aspect reflects the fat and fat distribution as found in corresponding real meat products.

In one preferred embodiment of the present invention, the formed meat analogue product does not comprise an ingredient from an animal origin. The product of the present invention is a vegetarian or vegan food product.

In one other embodiment of the present invention, the textured plant protein in the first part of the formed meat analogue product is selected from soy bean protein, pea protein, lentil protein, lupin bean protein, wheat gluten, or a combination thereof. Further appropriate protein sources may be proteins from beans such as green, red or black beans, chickpeas, fava beans, spirulina, or from chia, quinoa or hemp seeds.

In one embodiment of the present invention, the binder in the first part of the formed meat analogue product comprises a cellulose, a fiber, a gelatinized starch, an un-textured protein isolate, or a combination thereof.

"Gelatinized starch" can be sourced directly as gelatinized starch or can be achieved by cooking native starch with water.

"Un-textured plant protein isolate" refers to a protein isolate, which did not undergo a texturing process such as for example through extrusion.

Preferably, the binder used in the first part of the formed meat analogue product is a paste. A "paste" is a soft plastic composition, made with the cited ingredients and water, and which constitute the binder in the present invention.

In a preferred embodiment of the present invention, the vegetable fat comprised in the second part of the formed meat analogue product is solid at a temperature of 25°C, preferably at a temperature of 27°C, more preferably at a temperature of 30°C.

In one embodiment of the present invention, the vegetable fat in the second part is selected from coconut fat, palm fat, shea butter, or a combination thereof.

The starch in the second part of the formed meat analogue product is a physically processed starch. Preferably, the starch has a bulk density of below 50 g/100ml, preferably a bulk density from 8-40 g/100ml, more preferably from 10-30 g/100ml, even more preferably from 11-20 g/100ml.

It has been observed by the inventors that physically processed starch provides much better results in the present invention than natural, non-physically processed starch. This is particularly the case where the starch has been physically processed in such a way that its relative volume becomes increased and in parallel, its bulk density becomes lower. By increasing the volume of the starch molecules, the starch has a larger surface area and this will absorb a higher amount of fat and oil. Furthermore, this low density starch has also a much lower viscosity when cooked in comparison to regular native starch, and will better melt when heated in the presence of moisture. It will not leave any residual starch traces on a meat analogue product after the cooking process.

And the inventors have particularly observed that processed starch with a bulk density below 50 g/100ml, and particularly even below 40 g/100ml, or below 30 g/100g or even below 20 g/100ml provide even further better results as to the melting behaviour in the process of the present invention.

In a preferred embodiment of the present invention, the second part of the formed meat analogue product comprises particles having an average particle size of 2-20mm. In a more preferred embodiment of the present invention, the particles have an average particle size of 5-15mm. The presence of those particles significantly help to improve the forming of the visual aspect of the marbled meat analogue product.

"Average particle size" is defined herein as meaning that 90% of all particles of a batch of particles fall within a particular defined size range in [mm]. The size of the particles were herein determined by sieving through appropriate sieves or a mesh.

In one embodiment of the present invention, the second part of the formed meat analogue product comprises at least 20% fat. Preferably, this second part comprises at least 30% fat. In a further preferred embodiment, this second part does not comprise more than 90% fat, preferably not more than 80% fat, more preferably not more than 60% fat. Advantageously, this allows to actually reducing the effective amount of fat in the meat analogue product as to what a consumer may optically perceive from the presence of the vegetable fat/starch composition. Hence, a 'fat' marbled meat analogue product has effectively less fat than a similarly fat marbled real meat product. It is a healthier choice.

In one embodiment of the present invention, the second part of the formed meat analogue product comprises at least 10% starch, preferably at least 20% starch. Preferably, the second part of the formed meat analogue product does not comprise more than about 40% starch, preferably even not more than 35% starch. In a further embodiment of the present invention, the starch is gelatinized.

In one other embodiment of the present invention, the second part of the formed meat analogue product comprises at least 20% vegetable fat and at least 20% starch.

In one other embodiment of the present invention, the formed meat analogue product is composed of at least 50% of the first part and at least 5% of the second part, preferably at least 10% of the second part. According to one further preferred embodiment, the formed meat analogue product according to the present invention, consisting of the first part and the second part, wherein the first part is comprised between 60 and 90%, and the second part between 10 and 40% of the formed meat analogue product.

In one other embodiment of the present invention, after a heat treatment at 80°C for at least 15 minutes, the marbled aspect of the formed meat analogue product is not visible anymore. This should again mimic the process and visual effect when cooking a real fat-marbled formed meat product.

In one important embodiment of the present invention, the formed meat analogue product is raw and requires cooking before consumption. The meat analogue product of the present invention is intended to mimic raw meat products, which are commercialized as such and are subsequently cooked by the consumer or a professional food out-let. Hence, the formed meat analogue product of the present invention is raw, meaning that it has not previously been cooked. It is commercialized raw and required to be cooked thereafter by a consumer or a direct food provider.

In one embodiment of the present invention, the formed meat analogue product is a patty, a ball or a sausage.

Those skilled in the art will understand that they can freely combine all features of the present invention disclosed herein, described for the different embodiments of the present invention. Further advantages and features of the present invention are apparent from the figures and examples.

### Example 1: Preparation of first part plant protein composition

A standard structured plant protein composition was prepared with the following ingredients as listed below:
15% of textured soy protein, 6% vegetable oil, 1% salt, 2% seasonings, and 10% of a binder composition with methyl-cellulose, non-textured plant protein isolate and starch as ingredients, and the rest being water.

Batches of 4.5kg structured plant protein composition were prepared as follows:
Commercially sourced textured soy protein was wetted with part of the water. In parallel, a binder was prepared by mixing the methyl-cellulose with non-textured soy protein isolate, starch and rest of the water. Oil, salt and the seasonings were added to the binder composition, which was mixed into a paste. Thereafter, the wetted textured soy protein was added to the paste and everything was thoroughly mixed and stored at 4°C before further processing in making the formed meat analogue products.

### Example 2: Preparation of second part fat compositions

Two different fat compositions were prepared with the ingredients as specified below:
Sample 1: 80% coconut fat, 20% processed starch Aero-Myl 33 (bulk density of 11-16g/100ml);
Sample 2: 20% palm fat, 40% inulin, 40% of wetted gelatinized potato starch.

Potato starch was wetted and gelatinized by adding water to native potato starch (50:50 of starch and water) and cooking the mixture at 85°C for 15 min.

Batches of 0.5kg per sample were prepared each as follows: The fat was melted in a Stephan mixer at a temperature of 55°C. Thereafter, the starch and inulin, respectively, were added to the melted fat into the mixer. The composition was mixed at a mixing speed of between 500-1000 rpm for 15 minutes and at a temperature of 55°C. Thereafter, the composition was filled into a mold and slowly cooled down to 22°C in order to let the fat composition to solidify. The solid fat composition was removed from the mold and put in a freezer at -18°C to freeze and for storage. Before further processing and use of the fat composition for the making of formed meat analogue products, the frozen fat compositions were removed from the freezer, comminuted in a bench-top grinder and sieved through appropriate sieves to result in particles having an average size from 5-10mm.

### Example 3: Preparation of formed meat analogue product

Each 0.5kg of comminuted fat composition from Example 2 was each mixed with 4.5kg of plant protein composition from Example 1, and mixed under low shear condition in a pilot scale commercial mixer. Thereafter, the mixture was used to fill hydrocolloid based sausage casings. The thus obtained sausages were kept at 4°C until further analysis.

### Example 4: Analysis of meat analogue sausages

The sausages obtained from Example 3 were assessed as to their visual appearance before and after cooking in a pan.

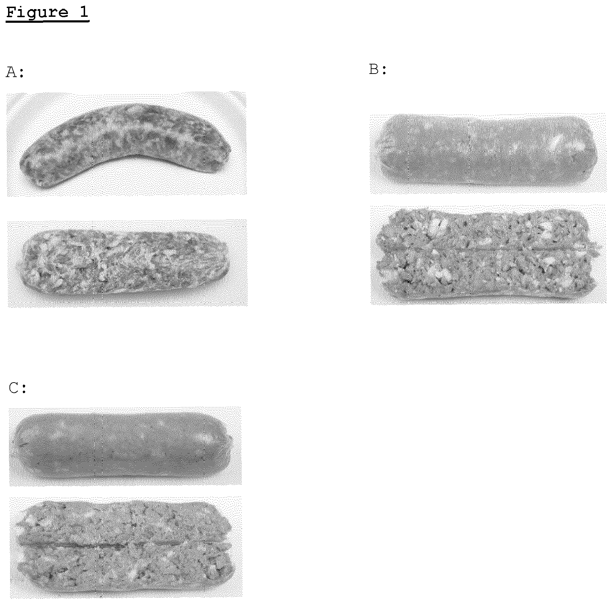

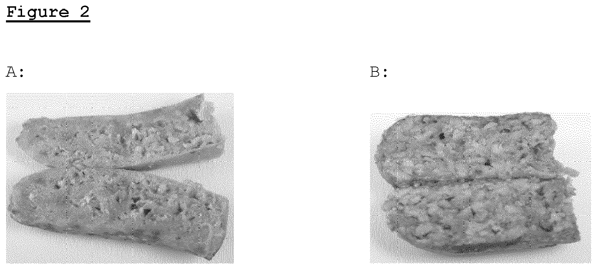

Before cooking, the sausages made according to the process described above resembled very much real raw meat European sausages. The comparisons are shown e.g. in Figure 1. Particularly, the meat-less or meat analogue sausages comprised two intermixed compositions or parts, the first part being the plant protein composition mimicking the meat-part of the real meat sausages. This part has a same color as the meat part and has a marbled aspect due to the second part, which in real sausages is the fat part. In the sausages of the present invention, this second part is the fat composition, having a similar color as the fat part in real meat sausages, and being intermixed with the first part in such a way as to provide the visual aspect of a marbled real meat sausage. Upon cooking of the meat analogue sausages of the present invention in a pan or on a grill, the fat analogue composition completely melts and the visual aspect of the marbled product disappears. This very much corresponds what is can be observed when cooking a raw real meat sausage in a pan or on a grill. An Example of a cooked meat analogue product of the present invention is shown in Figure 2.

In particular, the results have shown that the marbling effect of the present examples is visible from out-side the sausages, i.e. before cutting them in half, and also from the inside, i.e. when cut open. Sample 2 was rated satisfactory with an internal scoring of 3/5, when compared to corresponding real meat sausages. Sample 1 was rated better with a score of 5/5. It very well visually resembles a real meat product and it would be very difficult for a consumer to differentiate it from such real meat products if not directly compared one-to-one.

## Claims

1. A formed meat analogue product comprising two intermixed parts having each a color, wherein
- a first part comprises a textured plant protein, a binder, and optionally a colorant;
- a second part comprises a vegetable fat and at least 10% physically processed starch;
wherein the color of the second part is different from the color of the first part; and
wherein the second part is intermixed with the first part in such a way as to provide a visual aspect of the meat analogue product as a marbled meat analogue product.

2. The formed meat analogue product according to claim 1, which does not comprise an ingredient from an animal origin.

3. The formed meat analogue product according to one of the preceding claims, wherein the textured plant protein in the first part is selected from soy bean protein, pea protein, lentil protein, lupin bean protein, wheat gluten, or a combination thereof.

4. The formed meat analogue product according to one of the preceding claims, wherein the binder in the first part comprises a cellulose, a fiber, a gelatinized starch, an un-textured protein isolate, or a combination thereof.

5. The formed meat analogue product according to one of the preceding claims, wherein the vegetable fat in the second part is selected from coconut fat, palm fat, shea butter, or a combination thereof.

6. The formed meat analogue product according to one of the preceding claims, wherein the starch in the second part has a bulk density of below 50 g/100ml.

7. The formed meat analogue product of claim 6, wherein the starch in the second part has a bulk density from 8-40 g/100ml, preferably from 10-30 g/100ml, more preferably from 11-20 g/100ml.

8. The formed meat analogue product according to one of the preceding claims, wherein the second part comprises particles having an average particle size of 2-20mm.

9. The formed meat analogue product according to one of the preceding claims, wherein the second part comprises at least 20% vegetable fat and at least 20% starch.

10. The formed meat analogue product according to one of the preceding claims, wherein the formed meat analogue product is composed of at least 50% of the first part and at least 5% of the second part.

11. The formed meat analogue product according to one of the preceding claims, consisting of the first part and the second part, wherein the first part is comprised between 60 and 90%, and the second part between 10 and 40% of the formed meat analogue product.

12. The formed meat analogue product according to one of the preceding claims, wherein after a heat treatment at 80°C for at least 15 minutes, the marbled aspect of the formed meat analogue product is not visible anymore.

13. The formed meat analogue product according to one of the preceding claims, wherein the formed meat analogue product is raw and requires cooking before consumption.

14. The formed meat analogue product according to any one of the preceding claims, which is a patty, a ball or a sausage.

## Patentansprüche

1. Geformtes Fleischanalogprodukt, umfassend zwei miteinander vermischte Teile, die je eine Farbe aufweisen, wobei
- ein erster Teil ein texturiertes Pflanzenprotein, ein Bindemittel und optional ein Färbemittel umfasst;
- ein zweiter Teil ein Pflanzenfett und mindestens 10 % physikalisch verarbeitete Stärke umfasst;
wobei sich die Farbe des zweiten Teils von der Farbe des ersten Teils unterscheidet; und
wobei der zweite Teil mit dem ersten Teil auf eine solche Weise vermischt wird, dass ein visuelles Erscheinungsbild des Fleischanalogprodukts als ein durchwachsenes Fleischanalogprodukt bereitgestellt wird.

2. Geformtes Fleischanalogprodukt nach Anspruch 1, das keinen Inhaltsstoff von einem tierischen Ursprung umfasst.

3. Geformtes Fleischanalogprodukt nach einem der vorstehenden Ansprüche, wobei das texturierte Pflanzenprotein in dem ersten Teil aus Sojabohnenprotein, Erbsenprotein, Linsenprotein, Lupinbohnenprotein, Weizengluten oder einer Kombination davon ausgewählt ist.

4. Geformtes Fleischanalogprodukt nach einem der vorstehenden Ansprüche, wobei das Bindemittel in dem ersten Teil eine Cellulose, eine Faser, eine gelatinierte Stärke, ein nicht texturiertes Proteinisolat oder eine Kombination davon umfasst.

5. Geformtes Fleischanalogprodukt nach einem der vorstehenden Ansprüche, wobei das Pflanzenfett in dem zweiten Teil aus Kokosfett, Palmfett, Sheabutter oder einer Kombination davon ausgewählt ist.

6. Geformtes Fleischanalogprodukt nach einem der vorstehenden Ansprüche, wobei die Stärke in dem zweiten Teil eine Schüttdichte von unter 50 g/100 ml aufweist.

7. Geformtes Fleischanalogprodukt nach Anspruch 6, wobei die Stärke in dem zweiten Teil eine Schüttdichte von 8-40 g/100 ml, vorzugsweise von 10-30 g/100 ml, stärker bevorzugt von 11-20 g/100 ml aufweist.

8. Geformtes Fleischanalogprodukt nach einem der vorstehenden Ansprüche, wobei der zweite Teil Teilchen umfasst, die eine durchschnittliche Teilchengröße von 2-20 mm aufweisen.

9. Geformtes Fleischanalogprodukt nach einem der vorstehenden Ansprüche, wobei der zweite Teil mindestens 20 % Pflanzenfett und mindestens 20 % Stärke umfasst.

10. Geformtes Fleischanalogprodukt nach einem der vorstehenden Ansprüche, wobei das geformte Fleischanalogprodukt aus mindestens 50 % des ersten Teils und mindestens 5 % des zweiten Teils besteht.

11. Geformtes Fleischanalogprodukt nach einem der vorstehenden Ansprüche, das aus dem ersten Teil und dem zweiten Teil besteht, wobei der erste Teil zwischen 60 und 90 % und der zweite Teil zwischen 10 und 40 % des geformten Fleischanalogprodukts beträgt.

12. Geformtes Fleischanalogprodukt nach einem der vorstehenden Ansprüche, wobei nach einer Wärmebehandlung bei 80 °C für mindestens 15 Minuten das durchzogene Erscheinungsbild des geformten Fleischanalogprodukts nicht mehr sichtbar ist.

13. Geformtes Fleischanalogprodukt nach einem der vorstehenden Ansprüche, wobei das geformte Fleischanalogprodukt roh ist und vor einem Verzehr ein Kochen erfordert.

14. Geformtes Fleischanalogprodukt nach einem der vorstehenden Ansprüche, das ein Bratling, ein Klößchen oder eine Wurst ist.

## Revendications

1. Produit analogue de viande formé comprenant deux parties entremêlées ayant chacune une couleur, dans lequel
- une première partie comprend une protéine végétale texturée, un liant et facultativement un colorant ;
- une seconde partie comprend une matière grasse végétale et au moins 10 % d'amidon traité physiquement ;
dans lequel la couleur de la seconde partie est différente de la couleur de la première partie ; et
dans lequel la seconde partie est entremêlée avec la première partie d'une manière telle à fournir un aspect visuel du produit analogue de viande tel qu'un produit analogue de viande marbré.

2. Produit analogue de viande formé selon la revendication 1, qui ne comprend pas d'ingrédient provenant d'origine animale.

3. Produit analogue de viande formé selon l'une des revendications précédentes, dans lequel la protéine végétale texturée dans la première partie est choisie parmi protéine de fèves de soja, protéine de pois, protéine de lentilles, protéine de fèves de lupin, gluten de blé, ou une combinaison de ceux-ci.

4. Produit analogue de viande formé selon l'une des revendications précédentes, dans lequel le liant dans la première partie comprend une cellulose, une fibre, un amidon gélatinisé, un isolat de protéines non texturé, ou une combinaison de ceux-ci.

5. Produit analogue de viande formé selon l'une des revendications précédentes, dans lequel la matière grasse végétale dans la seconde partie est choisie parmi matière grasse de noix de coco, matière grasse de palme, beurre de karité, ou une combinaison de ceux-ci.

6. Produit analogue de viande formé selon l'une des revendications précédentes, dans lequel l'amidon dans la seconde partie a une masse volumique apparente inférieure à 50 g/100 mL.

7. Produit analogue de viande formé selon la revendication 6, dans lequel l'amidon dans la seconde partie a une masse volumique apparente allant de 8 à 40 g/100 mL, de préférence de 10 à 30 g/100 mL, plus préférablement de 11 à 20 g/100 mL.

8. Produit analogue de viande formé selon l'une des revendications précédentes, dans lequel la seconde partie comprend des particules ayant une taille moyenne de particules de 2 à 20 mm.

9. Produit analogue de viande formé selon l'une des revendications précédentes, dans lequel la seconde partie comprend au moins 20 % de matière grasse végétale et au moins 20 % d'amidon.

10. Produit analogue de viande formé selon l'une des revendications précédentes, le produit analogue de viande formé étant composé d'au moins 50 % de la première partie et d'au moins 5 % de la seconde partie.

11. Produit analogue de viande formé selon l'une des revendications précédentes, constitué par la première partie et la seconde partie, la première partie étant comprise entre 60 et 90 %, et la seconde partie entre 10 et 40 % du produit analogue de viande formé.

12. Produit analogue de viande formé selon l'une des revendications précédentes, dans lequel après un traitement thermique à 80 °C pendant au moins 15 minutes, l'aspect marbré du produit analogue de viande formé n'est plus visible.

13. Produit analogue de viande formé selon l'une des revendications précédentes, le produit analogue de viande formé étant cru et exigeant une cuisson avant consommation.

14. Produit analogue de viande formé selon l'une quelconque des revendications précédentes, qui est une galette, une boulette ou une saucisse.
